(19) Europäisches Patentamt
European Patent Office
Office européen des brevets

(11) Publication number: **0 102 182**
**B1**

(12) # EUROPEAN PATENT SPECIFICATION

(45) Date of publication of patent specification: **30.07.86**

(51) Int. Cl.$^4$: **C 08 K 5/13**

(21) Application number: **83304239.3**

(22) Date of filing: **21.07.83**

(54) **Flame retarded resin composition.**

(30) Priority: **22.07.82 JP 126756/82**

(43) Date of publication of application:
**07.03.84 Bulletin 84/10**

(45) Publication of the grant of the patent:
**30.07.86 Bulletin 86/31**

(84) Designated Contracting States:
**DE FR GB**

(56) References cited:
**GB-A-1 158 163**
**US-A-3 058 946**
**US-A-3 347 822**

(73) Proprietor: **Ube Industries, Ltd.**
**12-32, Nishihonmachi 1-chome**
**Ube-shi, Yamaguchi-ken (JP)**

(72) Inventor: **Ito, Bunsaku**
**c/o Hirakata Resin Laboratories**
**Ube Industries Ltd. 3-10 Nakamiya-kita-machi**
**Hirakata-shi Osaka (JP)**
Inventor: **Fukuda, Kimio**
**c/o Hirakata Resin Laboratories**
**Ube Industries Ltd. 3-10 Nakamiya-kita-machi**
**Hirakata-shi Osaka (JP)**

(74) Representative: **Arthur, Bryan Edward et al**
**Withers & Rogers 4 Dyer's Buildings Holborn**
**London EC1N 2JT (GB)**

**EP 0 102 182 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the Invention

Field of the Invention

This invention relates to a flame retarded resin composition. More particularly, this invention relates to a flame retarded composition comprising an inflammable resin and a flame retarder.

Description of Prior Arts

Most of resins employed in practice are inflammable. For converting these inflammable resins to flame retarded resins, a flame retarder such as a phosphate ester, a halogen-containing phosphate ester, or a halogen compound is generally added to the inflammable resin.

Out of these known flame retarders, the phosphate ester retarder and halogen-containing phosphate ester retarder are mainly employed. However, most of both retarders are liquid, and their uses are accordingly limited to arts for retarding inflammability of urethane resin, vinyl chloride resin, and the like.

As for the halogen compound, chlorine compounds were generally employed. However, except for a chlorinated polyethylene and polychlorocyclopentadecane (trade name: Decloran, available from Hooker Chemical Corp.), most of the halogen compound flame retarders have been recently replaced with bromine compound flame retarders. The reason for the replacement is thought as follows: First, the bromine compound provides flame retarding effect several times as much as the chlorine comppond when compared at the same dosage level. Second, the bromine compound is less corrosive to metal surfaces of electric machinery and apparatus than the chlorine compound is. Third, the preparation of chlorine compound flame retarders possibly causes environmental pollutions.

The bromine compound flame retarders include a variety of types, such as an aliphatic compound type, an alicyclic compound type, and an aromatic compound type. These types of bromine compound flame retarders are properly employed depending upon nature of the resin to be flame-retarded and requirement level fo flame retarding. Nevertheless, the aliphatic bromine compound flame retarders generally are poor in both heat resistance and weather resistance, therefore are recently replaced with more stable alicyclic bromine compound flame retarders. Moreover, more stable aromatic bromine compound flame retarders are usually employed for resins requiring high stability.

However, contrary to assumption, previously known aromatic bromine compound flame retarders such as tetrabromobisphenol A (referred to herein as TBA) often show poorer flame retarding effect than the aliphatic and alicyclic bromine compound flame retarders.

It is presumed that such poor flame retarding effect of the aromatic bromine compound flame retarder is caused by the fact that said retarder is easily agglomerated and on-uniformly dispersed within a resin.

Summary of the Invention

Accordingly, a primary object of the present invention is to provide a flame retarded resin composition comprising an inflammable resin and a flame retarder.

The present invention provides a flame retarded resin composition comprising an inflammable resin and at least one tetrabromodihydroxydiphenylmethane selected from the group consisting of

(A) compound I having the formula:

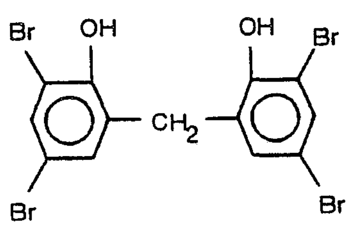

(B) compound II having the formula

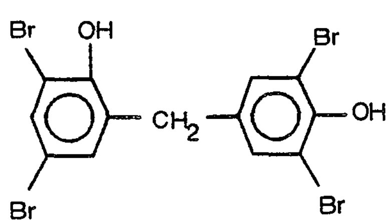

and,

(C) compound III having the formula:

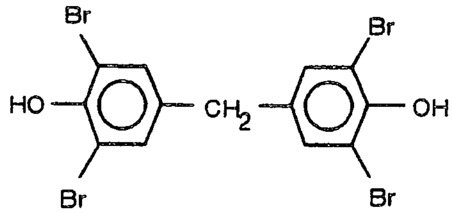

Description of Preferred Embodiments

In the present invention, the flame retarder, namely, the compound I, compound II, and compound III, all of which are classified as tetrabromodihydroxydiphenylmethane, are employable alone or in combination. The flame retarder of the invention may further comprise small amounts of trimer having the formula:

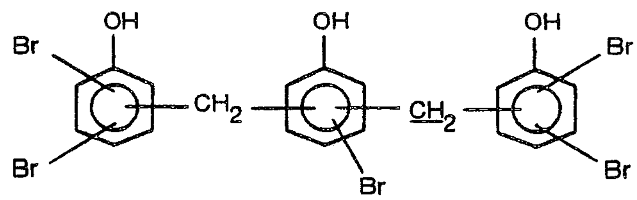

and a tetramer having the formula:

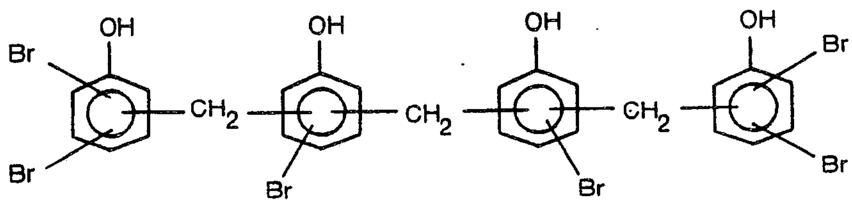

The tetrabromodihydroxydiphenylmethane employed as the flame retarder in the invention can be prepared by condensating phenol with formalin and brominating the so obtained condensate consisting mainly of dihydroxydiphenylmethane in the hydroxyl group-free positions, namely, ortho- and para-positions.

The tetrabromodihydroxydiphenylmethane obtained as above generally comprises the compound I, compound II and compound III, in which compound I amounts to 4—24 mol%, preferably 10—20 mol%; compound II amounts to 35—55 mol%, preferably 40—50 mol%; and compound III amounts to 22—42 mol%, preferably 25—35 mol%. The tetrabromodihydroxydiphenylmethane mixture obtainable as above generally contains the aforementioned trimer and tetramer. Accordingly, the tetrabromodihydroxydiphenylmethane of the invention may comprise 80—99 mol%, preferably 85—95 mol%, of the compounds I, II, and III (I + II + III), and 1—20 mol%, preferably 5—15 mol%, of the trimer and tetramer (trimer + tetramer).

In the resin composition of the present invention, there is no specific limitation on the inflammable resin. Examples of the inflammable resin employable in the invention include polystyrene, AS resin, ABS resin, nylon 11, nylon 12, polypropylene, polyethylene, polymethyl methacrylate, polyurethane, polyvinyl chloride, phenol resin, and unsaturated polyester.

The flame retarded resin composition of the present invention preferably comprises 60—95 % (more preferably 70—92 %) by weight of an inflammable resin and 5—40 % (more preferably 8—30 %) by weight of tetrabromodihydroxydiphenylmethane.

The flame retarder of the present invention, that is tetrabromodihydroxydiphenylmethane is, very uniformly dispersed in an inflammable resin. Accordingly, the resin composition containing tetrabromodihydroxydiphenylmethane is significantly improved in resistance to the conventional aromatic bromine compound flame retarders such as TbA (which are poor in dispersibility in inflammable resins, thus resulting in imparting poor resistance to flame to the resins), when employed at the same dosage level. Moreover, since tetrabromodihydroxydiphenylmethane shows high dispersibility in inflammable resins, the same can be incorporated uniformly into a resin in a relatively great amount so as to enable the inflammable resin to show highly improved resistance to flame.

In the flame retarded resin composition of the invention, tetrabromodihydroxydiphenylmethane can be comprised together with one or more other flame retarders and/or one or more flame-retarding

assistants such as antimony trioxide. If necessary, other additives such as glass fibers and inorganic fillers, can be incorporated as well.

The present invention is further described by the following examples. Tetrabromodihydroxydiphenylmethane referred to as Retarder F or Ret-F in the following examples was prepared as follows:

One mol. of phenol and 0.03 mol. of 37 % formalin were condensed at 100°C for 1 hour in the presence of 0.7 g. of oxalic acid. After the reaction was complete, excess phenol was removed by evaporation to obtain a condensate.

In a 3—1 flask equipped with a stirrer, a condenser, a thermometer and a dropping funnel were placed 210 g. of the condensate, 850 g. of methanol, and 150 g. of water. The mixture was stirred at room temperature until a solution was produced. Into the flask under cooling was dropped 656 g. (4.1 mol.) of bromine to undergo substitution reaction. The reaction mixture was then kept at 60°C for 2 hours for aging to obtain a product at a slurry state. The product was poured into water and then the mixture was stirred. Subsequently, the product was collected by filtration, washed with water, and dried to obtain 534.1 g of a product tetrabromodihydroxydiphenylmethane.

The so obtained product was analyzed in a high-speed liquid chromotography (HLC—802, manufactured by Toyo Soda Mfg. Co., Japan) and a gas chromotography (GC—7A, manufactured by Shimadzu Seisakusho Ltd., Japan) to reveal content of the product as follows;

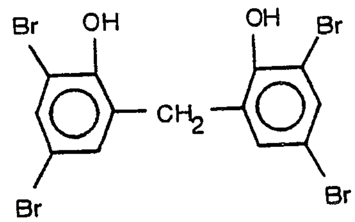

13 mol. %

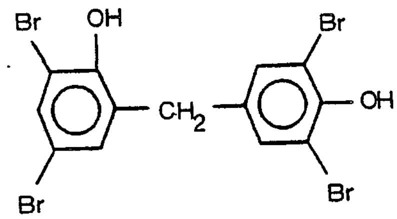

45 mol. %

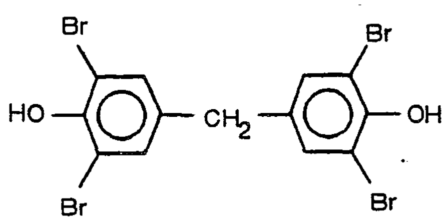

32 mol. %

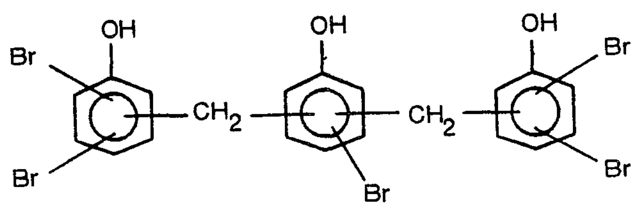

8 mol. %

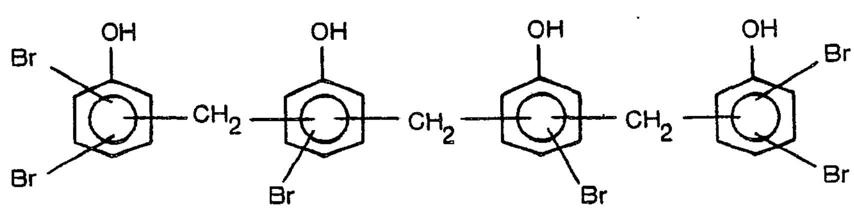

2 mol. %

Examples

(1) Preparation of Test Specimen

To polystyrene (impact resistant grade, Estyrene H—60, produced by Nippon Steel Chemical Co., Ltd., Japan), AS resin (Estyrene AS—61NT, Nippon Steel Chemical Co., Ltd.,), ABS resin (plating grade, Diapet

3001M, produced by Mitsubishi Rayon Co., Ltd., Japan), and nylon 12 (3014B, produced by Ube Industries, Ltd., Japan) was added Retarder F (Ret—F, prepared as above), TBA (Fireguard FG—2000, produced by Teijin Chemical Co., Ltd., Japan), a combination of Retarder F (Ret—F) and antimony trioxide ($Sb_2O_3$, purity 99 %, produced by Nihon Mining & Concentrating Co., Ltd., Japan), and a combination of TBA and antimony trioxide in the amounts set forth in Tables 1—4. These are uniformly blended in a tumbling mixer and kneaded under melted conditions in a double-screw extruder (PCM—30, manufactured by Ikegai Iron Works, Ltd., Japan), to prepare pellets. The pellets were then moulded in an injection machine to obtain test specimens (5 in. × 1/2 in. × 1/16 in.) for Standard UL—94, as well as test specimens (5 in. × 1/4 in. × 1/8 in.) for Flammability test defined in ASTM D 2863. (Note that "Estyrene" and "Diapet" are registered Trade Marks in some countries).

(2) Procedures of Flammability Tests

The flammability tests were carried out in accordance with Standard UL—94 (Underwriters-Laboratories Inc. of USA) and ASTM D 2863 (Flammability of Plastics Using the Oxygen Index Method. In Standard UL—94 test, a test specimen catching fire on the cotton even for a few seconds were marked UL—94 V—2 according to the Standard.

(3) Procedure of Observation on Dispersability of Flame Retarder

The test specimen for the oxygen index flammability test was freeze-dried and ruptured to show a cross-section, form which TBA or Retarder F was extracted with menthanol at room temperature for 30 min. The cross-section of the ruptured specimen was then subjected to microscopic observation on the dispersibility by means of a scanning type electron microscope (H—6010 type, manufactured by Hitachi Ltd., Japan).

(4) Results —

The composition tested in the examples and their test results are set forth in Tables 1—4. As is apparent from the results, the resin compositions cotaining Retarder F according to the present invention show excellent dispersibility and flame retarding effect.

TABLE 1
(Resin: Polystyrene)

| | | Dispersibility | Flammability (1/16 in.) UL—94 | Oxygen Index |
|---|---|---|---|---|
| Reference | Resin 100 wt.% | — | Flammable | 18.0 |
| Comparison Example 1 | Resin 90wt.%<br>TBA 10 | Uniform | V—2 | 21.1 |
| 2 | Resin 90wt.%<br>TBA 8<br>$Sb_2O_3$ 2 | Uniform | Flammable | 21.1 |
| 3 | Resin 80wt.%<br>TBA 20 | Non-uniform | Flammable | 23.7 |
| 4 | Resin 80wt.%<br>TBA 16<br>$Sb_2O_3$ 4 | Non-uniform | V—2 | 26.3 |
| Example 1 | Resin 90wt.%<br>Ret-F 10 | Uniform | V—2 | 23.2 |
| 2 | Resin 90wt.%<br>Ret-F 8<br>$Sb_2O_3$ 2 | Uniform | V—2 | 23.2 |
| 3 | Resin 80wt.%<br>Ret-F 20 | Uniform | V—2 | 25.9 |
| 4 | Resin 80 wt.%<br>Ret-F 16<br>$Sb_2O_3$ 4 | Uniform | V—0 | 28.9 |

TABLE 2
(Resin: AS Resin)

| | | Dispersibility | Flammability (1/16 in.) UL—94 | Oxygen Index |
|---|---|---|---|---|
| Reference | Resin 100 wt.% | — | Flammable | 18.9 |
| Comparison Example | | | | |
| 5 | Resin 90wt.%<br>TBA 10 | Uniform | V—2 | 22.4 |
| 6 | Resin 90wt.%<br>TBA 8<br>$Sb_2O_3$ 2 | Uniform | V—2 | 21.1 |
| 7 | Resin 80wt.%<br>TBA 20 | Non-uniform | V—2 | 23.7 |
| 8 | Resin 80wt.%<br>TBA 16<br>$Sb_2O_3$ 4 | Non-uniform | V—2 | 25.4 |
| Example | | | | |
| 5 | Resin 90wt.%<br>Ret-F 10 | Uniform | V—2 | 25.0 |
| 6 | Resin 90wt.%<br>Ret-F 8<br>$Sb_2O_3$ 2 | Uniform | V—0 | 23.2 |
| 7 | Resin 80wt.%<br>Ret-F 20 | Uniform | V—0 | 26.3 |
| 8 | Resin 80 wt.%<br>Ret-F 16<br>$Sb_2O_3$ 4 | Uniform | V—0 | 28.5 |

TABLE 3
(Resin: ABS Resin)

| | | Dispersibility | Flammability (1/16 in.) UL—94 | Oxygen Index |
|---|---|---|---|---|
| Reference | Resin 100 wt.% | — | Flammable | 18.9 |
| Comparison Example 9 | Resin 90wt.% TBA 10 | Uniform | Flammable | 22.4 |
| 10 | Resin 90wt.% TBA 8 $Sb_2O_3$ 2 | Uniform | Flammable | 22.8 |
| 11 | Resin 80wt.% TBA 20 | Non-uniform | V—2 | 27.2 |
| 12 | Resin 80wt.% TBA 16 $Sb_2O_3$ 4 | Non-uniform | V—2 | 26.8 |
| Example 9 | Resin 90wt.% Ret-F 10 | Uniform | V—2 | 24.1 |
| 10 | Resin 90wt.% Ret-F 8 $Sb_2O_3$ 2 | Uniform | V—2 | 24.1 |
| 11 | Resin 80wt.% Ret-F 20 | Uniform | V—2 | 29.4 |
| 12 | Resin 80 wt.% Ret-F 16 $Sb_2O_3$ 4 | Uniform | V—0 | 32.0 |

TABLE 4
(Resin: Nylon 12)

| | | Dispersibility | Flammability (1/16 in.) UL—94 | Oxygen Index |
|---|---|---|---|---|
| Reference | Resin 100 wt.% | — | V—2 | 21.1 |
| Comparison Example 13 | Resin 90wt.%<br>TBA 8<br>$Sb_2O_3$ 2 | Uniform | V—2 | 26.3 |
| 14 | Resin 80wt.%<br>TBA 16<br>$Sb_2O_3$ 4 | Non-uniform | V—0 | 30.3 |
| Example 13 | Resin 90wt.%<br>Ret-F 8<br>$Sb_2O_3$ 2 | Uniform | V—2 | 28.1 |
| 14 | Resin 80wt.%<br>Ret-F 16<br>$Sb_2O_3$ 4 | Uniform | V—0 | 32.0 |

**Claims**

1. A flame retarded resin composition comprising an inflammable resin and a tetrabromobisphenol composition, characterised in that the tetrabromobisphenol composition comprises at least one tetrabromodihydroxydiphenylmethane selected from the group consisting of

(A) compound I having the formula:

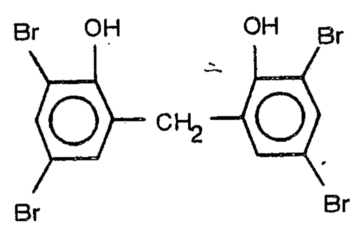

(B) compound II having the formula:

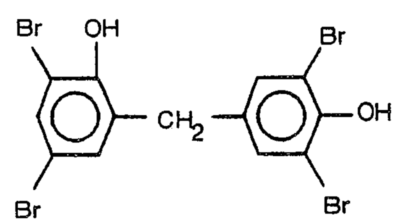

and,

(C) compound III having the formula:

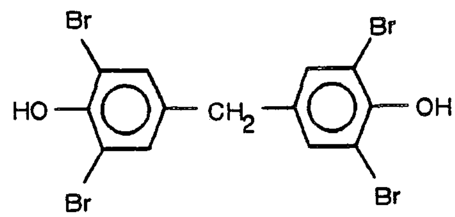

2. The flame retarded resin composition as claimed in Claim 1, in which the composition comprises 60—95 % by weight of an inflammable resin and 5—40 % by weight of tetrabromodihydroxydiphenylmethane.

3. The flame retarded resin composition as claimed in Claim 2, in which the compostion comprises 70—92 % by weight of an inflammable resin and 8—30 % by weight of tetrabromodihydroxydiphenylmethane.

4. The flame retarded resin composition as claimed in Claim 1, in which the compound I, compound II and compound III are all comprised in the composition.

5. The flame retarded resin composition as claimed in Claim 4, in which the molar ratio of the compounds I:II:III is 4—24:35—55:22—42.

6. The flame retarded resin composition as claimed in Claim 5, in which the molar ratio of the compounds I:II:III is 10—20:40—50:25—35.

7. The flame retarded resin composition as claimed in Claim 1, in which a trimer having the formula:

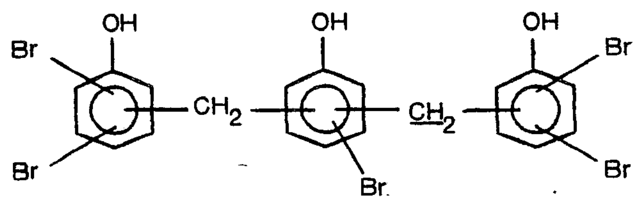

and a tetramer having the formula

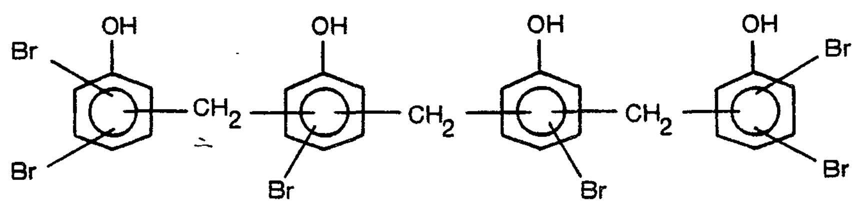

are further comprised in the composition.

8. The flame retarded resin composition as claimed in Claim 1, in which at least one flame retarding assistant is further comprised in the composition.

9. The flame retarded resin composition as claimed in Claim 8, in which the flame retarding assistant is antimony trioxide.

10. The flame retarded resin composition as claimed in Claim 1, in which the inflammable resin is selected from the group consisting of polystyrene, AS resin, ABS resin, nylon 11, nylon 12, polypropylene, polyethylene, polymethyl methacrylate, polyurethane, polyvinyl chloride, phenol resin and unsaturated polyester.

**Patentansprüche**

Flammgeschützte Harzzusammensetzung mit einem nicht enftlammbaren Harz und einer Tetrabrombisphenolzussammensetzung, dadurch gekennzeichnet, daß die Tetrabrombisphenolzussammensetzung zumindest ein Tetrabromdihydroxydiphenylmethan enthält, das aus der folgenden Gruppe ausgewählt ist
(A) eine Verbindung I mit der Formel

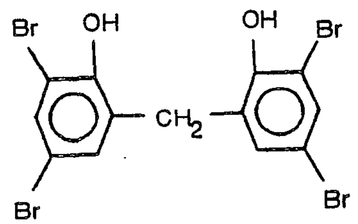

(B) eine Verbindung II mit der Formel

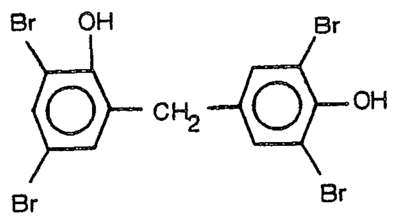

und
(C) eine Verbindung III mit der Formel

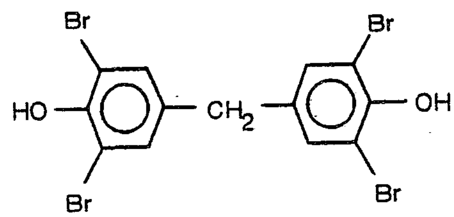

2. Flammgeschützte Harzzusammensetzung wie in Anspruch 1 beansprucht, bei der die Zusammensetzung 60—95 Gew.% nicht entflammbares Harz und 5—40 Gew.% Tetrabromdihydroxydiphenylmethan enthält.

3. Flammgeschützte Harzzusammensetzung wie in Anspruch 2 beansprucht, bei der die Zusammensetzung 70—92 Gew.% nicht entflammbares Harz und 8—30 Gew.% Tetrabromdihydroxydiphenylmethan enthält.

4. Flammgeschützte Harzzusammensetzung wie in Anspruch 1 beansprucht, bei der die Zusammensetzung sowohl die Verbindung I als auch die Verbindung II als auch die Verbindung III enthält.

5. Flammgeschützte Harzzusammensetzung wie in Anspruch 4 beansprucht, bei der das Molverhältnis der Verbindungen I:II:III 4—24:35—55:22—42 beträgt.

6. Flammgeschützte Harzzusammensetzung wie in Anspruch 5 beansprucht, bei der das Molverhältnis der Verbindungen I:II:III 10—20:40—50:25—35 beträgt.

7. Flammgeschützte Harzzusammensetzung wie in Anspruch 1 beansprucht, bei der Verbindung ein Trimer mit der

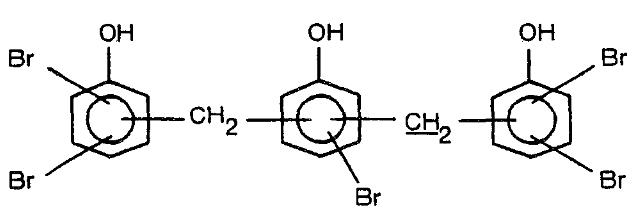

und ein Tetramer mit der Formel

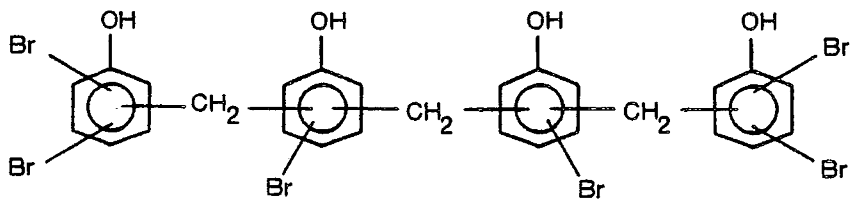

als weitere Bestandteile enthalten sind.

8. Flammgeschützte Harzzusammensetzung wie in Anspruch 1 beansprucht, bei der zumindest ein flammenhemmendes Unterstützungsmittel in der Verbindung enthalten ist.

9. Flammgeschützte Harzzusammensetzung wie in Anspruch 8 beansprucht, bei der das flammenhemmende Unterstützungsmittel Antimontrioxid ist.

10. Flammgeschützte Harzzusammensetzung wie in Anspruch 1 beansprucht, bei der das nicht entflammbare Harz aus folgender Gruppe ausgewählt ist: Polystren, AS Harz, ABS Harz, Nylon 11, Nylon 12, Polypropylen, Polyäthylen, Polymethyl, Methacrylat, Polyurethan, Polyvinylchlorid, Phenolharz und ungesätigte Polyester.

**Revendications**

1. Composition de résine ignifugée comprenant une résine inflammable et une composition à base de tétrabromobisphénol, caractérisée en ce que la composition à base de tétrabromobisphénol comprend au moins un tétrabromodihydroxydiphénolméthane choisi dans le groupe constitué par les composés répondant aux formules suivantes:

(A) formule:

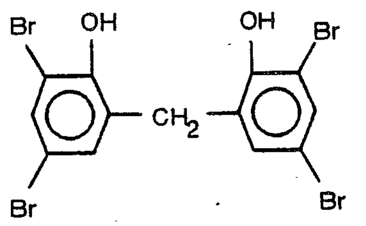

(B) formule

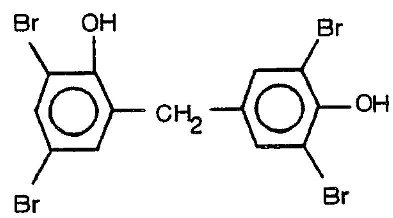

(C) formule:

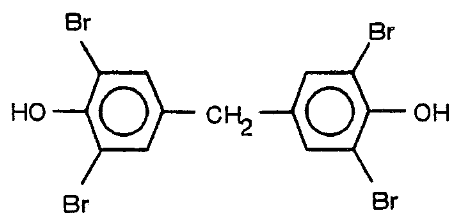

2. Composition de résine ignifugée suivant la revendication 1, caractérisée en ce que cette composition contient 60 à 95 % en poids d'une résine inflammable et 5 à 40 % en poids de tétrabromodihydroxy-diphénylméthane.

3. Composition de résine ignifugée suivant la revendication 2, caractérisée en ce que cette composition contient 70 à 92 % en poids d'une résine inflammable et 8 à 30 % en poids de tétrabromodihydroxy-diphénylméthane.

4. Composition de résine ignifugée suivant la revendication 1, caractérisée en ce que cette composé I, le composé II et le composé III sont tous trois compris dans la composition.

5. Composition de résine ignifugée suivant la revendication 4, caractérisée en ce que les rapports molaires entre les composés I, II et III sont de 4 à 24:35 à 55:22 à 42.

6. Composition de résine ignifugée suivant la revendication 5, caractérisée en ce que les rapports molaires entre les composés I, II et III sont de 10 à 20:40 à 50:25 à 35.

7. Composition de résine ignifugée suivant la revendication 1, caractérisée en ce qu'il est compris, en entre, dans la composition, un trimère répondant à la formule:

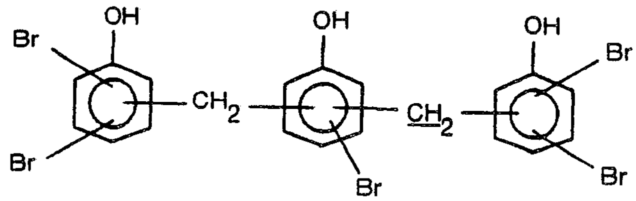

et un tétramère répondant à la formule:

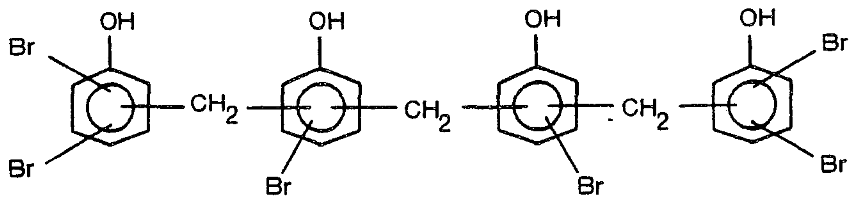

8. Composition de résine ignifugée suivant la revendication 1, caractérisée en ce qu'au moins un agent auxiliaire de retardement de la flamme est en plus compris dans la composition.

9. Composition de résine ignifugée suivant la revendication 8, caractérisée en ce que l'agent auxiliaire de retardement de la flamme est le trioxyde d'antimoine.

10. Composition de résine ignifugée suivant la revendication 1, caractérisée en ce que la résine inflammable est choisie dans le groupe consitué par les polystyrène, résine AS, résine ABS, nylon 11, nylon 12, polypropylène, polyéthylène, polyméthylméthacrylate, polyuréthane, chlorure de polyvinyle, résine phénolique et polyester insaturé.